# FASCICULE DE BREVET EUROPEEN

(11) **EP 2 586 173 B1**
(45) Date de publication et mention de la délivrance du brevet: **09.08.2017**
(21) Numéro de dépôt: 11735477.9
(22) Date de dépôt: 10.06.2011
(51) Int. Cl.: H04L 29/06

(54) **PROCÉDÉ DE SÉCURISATION, CARTE À PUCE, MODULE ET TERMINAL ASSOCIÉS**
SICHERHEITSVERFAHREN, ZUGEHÖRIGE CHIPKARTE, MODUL UND ENDGERÄT
SECURITY METHOD, ASSOCIATED CHIP CARD, MODULE AND TERMINAL

(30) Priorité: 22.06.2010 FR 1054966
(43) Date de publication de la demande: 01.05.2013
(73) Titulaire: Ercom, 78457 Velizy Villacoublay (FR)
(72) Inventeur: LEHOUX, Renaud, F-92160 Antony (FR)
(74) Mandataire: Ipside
(86) Numéro de dépôt international: PCT/FR2011/051326
(87) Numéro de publication internationale: WO 2011/161355

(56) Documents cités:
- WO-A2-02/069655

## Description

La présente invention concerne l'exploitation de données sécurisées sur une carte à puce présente dans un terminal sécurisé. Le terminal est par exemple un terminal mobile d'un réseau de télécommunications mobile, du type PDA ou téléphone mobile.

Dans un tel cas, le terminal doit faire appel régulièrement à des fonctions sécurisées offertes par la carte à puce, par exemple pour effectuer, entre le terminal et un serveur du réseau, une réauthentification ou une renégociation de clé périodique suite à une déconnexion entre le terminal et le serveur, afin de maintenir un service par exemple de réception de courriers électroniques, de réception d'appels téléphoniques etc. ou encore en cas de réception d'un appel sécurisé entrant, afin d'effectuer une authentification entre le terminal local et le terminal distant.

Pour que des applications logicielles ou modules matériels du terminal accèdent aux fonctions sécurisées présentes sur la carte à puce, et les utilisent, l'entrée par l'utilisateur d'un code, nommé code PIN (en anglais « Personal Identification Number »), est requise. Ce code, numéro d'identification personnel ou code confidentiel, est une suite de chiffres destinée à authentifier l'utilisateur, propriétaire d'une carte à puce.

Ce code protège la carte à puce contre toute utilisation non autorisée. Et par exemple, au bout de trois mauvaises saisies du PIN par l'utilisateur, le terminal mobile se bloque et il faut le faire débloquer par un administrateur.

Une fois utilisées les fonctions sécurisées sur la carte à puce pour mettre en oeuvre une opération courante par le terminal, il est fréquent de couper l'alimentation de la carte à puce, en vue de limiter la consommation d'énergie électrique.

Cette arrêt d'alimentation implique cependant de rentrer à nouveau le code PIN lors d'un nouvel appel, par une application du terminal, à une fonction sécurisée présente sur la carte.

Dans le cas où ces fonctions protégées doivent être utilisées fréquemment, plusieurs approches peuvent être envisagées pour répondre à ce problème.

Il est par exemple possible de demander à l'utilisateur de rentrer le code PIN de la carte à puce à chaque fois qu'une fonction sécurisée de la carte est appelée.

Il est également envisageable de demander à l'utilisateur de rentrer le code PIN chaque fois que l'appareil sort d'une période d'inactivité, de maintenir la carte déverrouillée tant que le terminal est utilisé, et de couper l'alimentation de la carte après un certain temps passé sans interaction de la part de l'utilisateur, par exemple lorsque le terminal passe en veille. Une solution envisageable est aussi de supprimer le code PIN.

Une autre solution serait de stocker le code PIN dans le terminal lui-même, dans une mémoire supplémentaire à celle de la carte à puce (pour que le terminal puisse déverrouiller la carte à puce de lui-même, sans faire appel à la saisie du code PIN par l'utilisateur). Le document WO02/069655 A2 décrit des techniques de gestion d'alimentation pour un module SIM d'un dispositif de communication sans-fil (WCD- Wireless Communication Device). En particulier, pour gérer le cas du réveil de la carte à puce, la solution décrite propose de mettre en cache le code PIN ou le CHV (Card Holder Verification) code de l'utilisateur. Une solution serait de diminuer les accès à la carte à puce, par exemple en utilisant une crypto-période plus grande.

Une solution serait de maintenir l'alimentation de la carte à puce en continu, y compris pendant les périodes d'inactivité du terminal, comme cela est fait pour la carte SIM (de l'anglais « Subscriber Identity Module »), qui est utilisée dans les réseaux GSM.

Néanmoins chacune de ces solutions envisagées présente des inconvénients importants.

Ainsi l'entrée du code PIN, à chaque fois qu'une fonction protégée de la carte est appelée par le terminal, est contraignante pour l'utilisateur, en particulier lorsque ces fonctions doivent être appelées sans action préalable de l'utilisateur. Il est alors nécessaire d'alerter l'utilisateur fréquemment pour maintenir le service, ce qui est très contraignant. De même, l'obligation pour l'utilisateur d'entrer son code PIN à chaque réception d'appel sécurisé est très peut pratique, notamment en raison du risque de manquer l'appel à cause du temps passé à saisir le code.

La variante consistant à entrer le code PIN à chaque fois que l'appareil sort d'une période d'inactivité pose problème car en cas d'une longue période d'inactivité plus longue que la période maximale de réauthentification autorisée par le serveur, le service sera interrompu. Par ailleurs, cette approche ne résout pas le problème lié à la réception d'appels sécurisés.

La suppression du code PIN présente un problème majeur de sécurité, car l'accès à la carte à puce n'est plus protégé.

Le stockage du code PIN dans le terminal hors de la carte à puce présente un risque majeur de sécurité car il s'agit d'une donnée sensible stockée dans une zone non protégée.

La diminution des accès à la carte a un impact sur la sécurité, les clés utilisées pour les échanges entre le réseau (serveur) et le terminal étant régénérées moins souvent.

Le maintien en continu de l'alimentation de la carte à puce présente deux inconvénients : ce fonctionnement est consommateur d'énergie électrique et par ailleurs, cette solution présente un risque de sécurité : un attaquant pourrait, quand le terminal est inactif, extraire la carte de l'appareil tout en maintenant l'alimentation, afin d'accéder aux données ou aux fonctions protégées de la carte à puce.

L'invention propose une solution pour économiser l'énergie électrique consommée en coupant l'alimentation de la carte à puce lorsque l'accès à des fonctions sécurisées présentes sur la carte à puce n'est pas requis par le terminal, tout en préservant la sécurité.

A cet effet, suivant un premier aspect, l'invention propose un procédé de sécurisation dans un terminal comprenant une carte à puce offrant des fonctions sécurisées, une interface utilisateur, un module d'interfaçage avec la carte à puce adapté pour au moins commander un arrêt ou une mise en oeuvre de l'alimentation électrique de la carte à puce, le procédé comprenant les étapes suivantes:
- réception d'un code par l'interface utilisateur du terminal;
- fourniture via le module d'interfaçage dudit code à la carte à puce ;
- vérification par la carte à puce que le code est égal à un code d'accès à la carte stocké sur la carte à puce, et seulement dans le cas positif, exploitation par le module d'interfaçage de fonctions sécurisées offertes la carte à puce;
- puis, négociation entre le module d'interfaçage et la carte à puce d'au moins une clé et stockage d'au moins ladite clé négociée par le module d'interfaçage et par la carte à puce ;
et selon lequel, après un arrêt, puis une remise en oeuvre, de l'alimentation électrique de la carte à puce par le module d'interfaçage, le terminal étant maintenu sous tension, le procédé comprenant les étapes suivantes
(i) chiffrement d'une commande de reprise d'exploitation par le module d'interfaçage de fonctions sécurisées offertes la carte à puce par le module d'interfaçage avec la clé négociée stockée par le module d'interfaçage et envoi de ladite commande chiffrée à la carte à puce ;
(ii) réception par la carte à puce de ladite commande chiffrée et déchiffrement de ladite commande chiffrée par la clé négociée stockée dans la carte à puce
(iii) puis, exploitation par le module d'interfaçage de fonctions sécurisées offertes par la carte à puce, seulement si la commande de reprise déchiffrée par la carte à puce est reconnue en tant que commande de reprise par la carte à puce.

Cette solution présente notamment les avantages suivants :
Le code PIN n'est pas stocké sur le terminal en dehors de la carte à puce.

L'alimentation de la carte à puce peut être coupée sans impact sur le fonctionnement ou l'ergonomie du terminal.

L'utilisateur n'a jamais à rentrer son code PIN sans qu'il ne soit à l'origine de l'action.

Les données sensibles stockées sur le terminal lui-même à l'extérieur de la carte à puce et relatives à l'accès aux fonctions sécurisées de la carte à puce sont limitées.

Le canal de communication entre le terminal et la carte est chiffré.

Dans un mode de réalisation, les étapes (i), (ii) et (iii) sont effectuées à chaque occurrence d'un arrêt, puis d'une remise en oeuvre, de l'alimentation électrique de la carte à puce par le module d'interfaçage, le terminal étant maintenu sous tension.

Dans un mode de réalisation, une nouvelle clé destinée au chiffrement de la commande de reprise est négociée entre le module d'interfaçage et la carte à puce après chaque occurrence d'un arrêt, puis d'une remise en oeuvre, de l'alimentation électrique de la carte à puce par le module d'interfaçage, le terminal étant maintenu sous tension.

Dans un mode de réalisation, l'exploitation par le module d'interfaçage de fonctions sécurisées offertes par la carte à puce est réalisée pour la mise en oeuvre par le terminal d'une communication à destination d'un réseau de télécommunications mobiles.

Dans un mode de réalisation, la clé destinée au chiffrement de la commande de reprise dernièrement négociée entre le module d'interfaçage et la carte à puce est en outre utilisée pour chiffrer les échanges entre le module d'interfaçage et la carte à puce dans le cadre de l'exploitation par le module d'interfaçage de fonction(s) sécurisée(s) pour la mise en oeuvre par le terminal d'une communication à destination d'un réseau de télécommunications mobiles.

Dans un mode de réalisation, le module d'interfaçage et la carte à puce négocient et stockent à la fois une clé de chiffrement et une clé de signature, et selon lequel la commande de reprise est signée à l'aide de la clé de signature et chiffrée à l'aide de la clé de chiffrement, l'exploitation par le module d'interfaçage de fonctions sécurisées offertes par la carte à puce étant reprise en outre seulement si la signature de la commande de reprise par le module d'interfaçage à l'aide de la clé de signature est reconnue par la carte à puce.

Suivant un deuxième aspect, l'invention propose un programme d'ordinateur destiné à une carte à puce comprenant des instructions permettant la mise en oeuvre des étapes, incombant à la carte à puce, d'un procédé suivant le premier aspect de l'invention lors de l'exécution dudit programme sur des moyens de traitement.

Suivant un troisième aspect, l'invention propose une carte à puce comprenant des moyens adaptés pour mettre en oeuvre les étapes, qui incombent à la carte à puce, d'un procédé suivant le premier aspect de l'invention.
Suivant un quatrième aspect, l'invention propose un module d'un terminal comprenant des moyens adaptés pour mettre en oeuvre les étapes, qui incombent au module d'interfaçage d'un procédé suivant le premier aspect de l'invention.
Suivant un cinquième aspect, l'invention propose un terminal comprenant une carte à puce suivant le troisième aspect de l'invention.et/ou un module suivant le quatrième aspect de l'invention.

D'autres caractéristiques et avantages de l'invention apparaîtront encore à la lecture de la description qui va suivre. Celle-ci est purement illustrative et doit être lue en regard des dessins annexés sur lesquels :
- la figure 1 représente un système de radiocommunications dans lequel un mode de réalisation de l'invention est mis en oeuvre ;
- la figure 2 est un organigramme représentant des étapes dans un mode de mise en oeuvre d'un procédé selon l'invention.

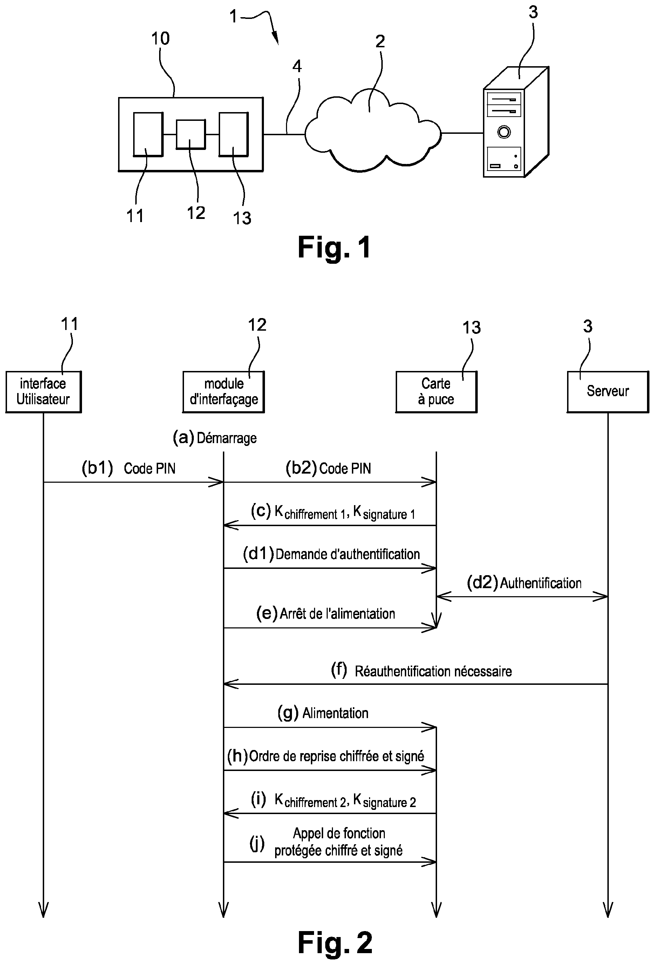

Sur la figure 1 est représenté un système 1 dans lequel un mode de réalisation est mise en oeuvre.

Le système 1 comporte un réseau 2 de radiocommunications reliant une pluralité de terminaux et des serveurs.

On considère dans la suite de la description un serveur 3 relié au réseau 2, et un terminal mobile 10 relié au réseau 2 par un lien radio 4.

Le terminal mobile 10 comprend une interface utilisateur 11, une carte à puce amovible 13 et un module d'interfaçage 12.

La carte à puce 13 comprend une mémoire, un générateur d'aléas et des fonctions de sécurité.

Le module d'interfaçage 12 gère les échanges avec la carte à puce pour le terminal 10. Le module d'interfaçage 12 est notamment adapté pour commander l'arrêt ou la remise en service sélectivement de l'alimentation de la carte à puce, lorsque le terminal 10 restant lui-même alimenté électriquement, généralement par une batterie figurant dans le terminal 10. On nommera ci-dessous arrêt local (respectivement remise en service locale) de l'alimentation de la carte à puce, un arrêt (respectivement une remise en service) sélectivement de l'alimentation de la carte à puce, le terminal 10 restant lui-même alimenté électriquement.

Parmi ces fonctions de sécurité exécutables sur la carte à puce et exploitables par le module d'interfaçage figurent notamment, par exemple :
- un générateur de clés par exemple RSAen fonction notamment du générateur d'aléas et stockage en mémoire persistante des clés ;
- une fonction d'import de clé RSA, avec stockage en mémoire persistante ;
- une fonction d'export de clé RSA, accessible seulement si la clé a été définie comme extractible lors de l'import ou de la génération ;
- une fonction de signature en fonction d'une clé RSA ;
- une fonction de chiffrement en fonction d'une clé RSA ;
- une fonction d'authentification d'un code PIN mémorisé sur la carte à puce ;
- une fonction de déblocage par codes à usages uniques, accessible en cas de blocage du code PIN ;
- une fonction d'authentification avec une autre carte à puce ;
- des fonctions de stockage de données en mémoire persistante, utilisées par le boîtier pour stocker des clés symétriques et des certificats ;
Ces fonctions sont accessibles uniquement lorsque la carte est déverrouillée.

En référence à l'organigramme de la figure 2 représentant des échanges entre l'utilisateur, le terminal 10 comprenant l'interface utilisateur 11, le module d'interfaçage 12, la carte à puce 13, et le serveur 13 du réseau, les étapes suivantes sont mises en oeuvre.

Dans un mode de réalisation, ces étapes sont mises en oeuvre suite à l'exécution, sur des moyens de traitement, d'instructions de programme d'ordinateur.

Lors du démarrage du terminal 10 (étape a), qui est alimenté électriquement de même que la carte à puce, l'entrée du code PIN est requise auprès de l'utilisateur par l'intermédiaire de l'interface utilisateur 11. Sur réception par l'interface utilisateur d'un code saisi par l'utilisateur par exemple sur un clavier présenté par le terminal 10 (étape b1), ce code saisi est fourni à la carte à puce 13 par le module d'interfaçage 12.

Seulement si la carte à puce identifie ce code reçu comme égal au code PIN mémorisé dans la carte, l'utilisation par le module d'interfaçage 12 des fonctions sécurisées offertes par la carte à puce est permis pour la mise en oeuvre de services proposé par le terminal, par exemple une étape préalable d'authentification entre le terminal 10 et le réseau.

Dans le mode de réalisation considéré, une clé de chiffrement K_{chiffrement1} et une clé de signature K_{signature1} sont générées par la carte à puce 13, et fournies par la carte à puce 13 au module d'interfaçage 12 (étape c). Ces clés sont stockées d'une part par la carte à puce 13 en mémoire persistante (ie espace de stockage dont les données, une fois écrites, sont conservées durablement, même en cas d'arrêt de l'alimentation en énergie) et d'autre part par le module d'interfaçage 12 en mémoire non persistante (ie espace de stockage dont les données, une fois écrites, ne sont pas conservées durablement, notamment sont effacées par exemple dans des cas d'arrêt de l'alimentation en énergie).

Par ailleurs, lorsqu'il est nécessaire de réaliser une étape d'authentification du terminal 10 et du serveur 3 du réseau pour mettre en oeuvre des services (exemple : des messages électroniques et des appels vocaux), un appel à la mise en oeuvre de la fonction d'authentification présente sur la carte à puce est réalisé par le module d'interfaçage 12 à destination de la carte à puce 13 (étape d1), chiffré et signé à l'aide respectivement de K_{chiffrement1} et de K_{signature1}. Les étapes d'authentification réciproque entre le terminal 10 et du serveur 3 sont menées à l'aide de données mémorisées dans la carte à puce 13 relatives à l'authentification entre le terminal 10 et le serveur 3, et de certaines des fonction sécurisées présentes sur la carte à puce 13 (étape d2), notamment des fonctions de chiffrement et signature de clé RSA (autres que K_{chiffrement1} et de K_{signature1)}. Toutes les interactions entre le terminal et la carte (dans les deux directions) sont chiffrées et signées à l'aide respectivement de K_{chiffrement1} et de K_{signature1}.

Un arrêt local de l'alimentation de la carte à puce 13 est alors commandé par le module d'interfaçage 12, par exemple après une durée prédéterminée pendant laquelle aucun appel aux fonctions sécurisées de la carte à puce n'a été réalisé (étape e). La carte à puce est alors inutilisable par le terminal 10.

Ultérieurement, un appel à une fonction de sécurité offerte par la carte à puce 13 (étape f) est requis auprès du module d'interfaçage 12, par exemple suite à une demande par le serveur 3 d'une réauthentification par le terminal 10 auprès du réseau 2, ou bien suite à la réception d'un appel sécurisé nécessitant l'authentification d'un terminal distant.

Avant que le module d'interfaçage 12 n'appelle auprès de la carte à puce 13 l'utilisation de la fonction de sécurité requise, il effectue les étapes g et h précisées ci-dessous.

Ainsi le module d'interfaçage 12 commande le retour local de l'alimentation électrique de la carte à puce 13 (étape g).

Puis le module d'interfaçage 12 chiffre et signe à l'aide respectivement de la clé K_{chiffrement1} et de la clé K_{signature1} qu'il a mémorisées, une commande requérant la reprise par le module d'interfaçage 12 de l'exploitation d'une ou plusieurs fonctions sécurisées offertes par la carte à puce 13 La carte à puce 13 n'autorise cette exploitation que si la signature du module d'interfaçage à l'aide de la clé de signature K_{signature1} stockée dans la carte à puce 13 est bien reconnue et que si la commande déchiffrée à l'aide de la clé de chiffrement K_{chiffrement1} est elle aussi reconnue. (étape h).

En outre, si cette exploitation a été autorisée, une nouvelle clé de chiffrement K_{chiffrement2} et une nouvelle clé de signature K_{signature2} sont générées par la carte à puce 13, et fournies par la carte à puce 13 au module d'interfaçage 12 (étape i), similairement à l'étape c. Elles sont stockées d'une part par la carte à puce 13 et d'autre part par le module d'interfaçage 12.et elles seront utilisées de la même façon que les clés K_{chiffrement1} et K_{signature1} lors de la prochaine occurrence d'un arrêt/marche local de l'alimentation électrique de la carte à puce 13.

Dans une étape j, si l'exploitation des fonctions sécurisées a été autorisée à l'issue de l'étape h, le module d'interfaçage 12 exploite la fonction sécurisée requise par l'intermédiaire de la carte à puce 13, en chiffrant et en signant l'appel de fonction respectivement avec les clés K_{chiffrement2} et K_{signature2}

Plus généralement, les échanges entre le module d'interfaçage 12 et la carte à puce 13, nécessaires à cette exploitation de la fonction sécurisée sont chiffrés et signés avec les clés K_{chiffrement2} et K_{signature2}.

Ainsi la solution proposée permet de demander à l'utilisateur son code PIN lors du démarrage du terminal afin de négocier entre le terminal et la carte à puce une clé de chiffrement et une clé de signature, toutes deux à usage uniques. Ces clés sont stockées de façon persistante dans la carte à puce. Elle implémente une fonction de reprise, a l'aide d'une commande par exemple de type APDU chiffrée et signée à l'aide de ces clés. Si cette fonction réussit, l'accès aux fonctions protégées est autorisé.

Ceci permet au terminal de déverrouiller la carte à puce sans avoir besoin du code PIN.

Cette solution présente les avantages suivants :
Le code PIN n'est pas stocké en dehors de la carte à puce.

L'alimentation de la carte à puce peut être coupée sans impact sur le fonctionnement ou l'ergonomie du terminal.

L'utilisateur n'a jamais à rentrer son code PIN sans qu'il ne soit à l'origine de l'action.

Les seules données stockées sur le terminal en-dehors de la carte à puce, dans le mode de réalisation considéré, sont les clés K_{Chiffrement} et K_{Signature}, qui sont par exemple à usage unique. Elles sont automatiquement renouvelées, et la carte n'autorise par exemple qu'un seul essai avant invalidation en cas de non-reconnaissance d'une de ces deux clés.

Le canal de communication entre le module d'interfaçage et la carte est chiffré.

Dans d'autres modes de réalisation, les clés sont à usage limité au chiffrement et/ou la signature de n envois de la fonction de reprise chacun après un épisode respectif de coupure/reprise de l'alimentation locale de la carte à puce, avec n nombre entier prédéterminé supérieur ou égal à 1.

Dans une autre mode de réalisation, l'ordre de reprise est seulement signé ou seulement chiffré et donc une seule clé est négociée et utilisée relativement à un arrêt/marche localement de l'alimentation électrique de la carte à puce.

Dans le mode de réalisation décrit ci-dessus, la mise en oeuvre d'une fonctionnalité du terminal (ci-dessus les étapes d'authentification d1-d2 avec le serveur) faisant appel à une fonction de sécurité présente sur la carte à puce a été réalisée après l'étape de négociation (étape c) des clés K_{chiffrement1}, K_{signature1}. Dans un autre mode de réalisation, l'étape c est réalisée après les étapes d1 et d2. Il suffit que l'étape (étape c) de négociation des clés K_{chiffrement1}, K_{signature1} soit réalisée avant l'arrêt local de l'alimentation de la carte à puce (étape e).

Similairement l'étape i dans un autre mode de réalisation, est effectuée seulement après l'étape j et préalablement à un prochain arrêt de l'alimentation locale de la carte à puce.

## Revendications

1. Procédé de sécurisation dans un terminal (10) comprenant une carte à puce (13) offrant des fonctions sécurisées, une interface utilisateur (11), un module d'interfaçage (12) avec la carte à puce (13) adapté pour au moins commander un arrêt ou une mise en oeuvre de l'alimentation électrique de la carte à puce, le procédé comprenant les étapes suivantes:
- réception d'un code par l'interface utilisateur (11) du terminal (10);
- fourniture via le module d'interfaçage (12) dudit code à la carte à puce (13);
- vérification par la carte à puce (13) que le code est égal à un code d'accès à la carte stocké sur la carte à puce, et seulement dans le cas positif, exploitation par le module d'interfaçage de fonctions sécurisées offertes la carte à puce;
- puis, négociation entre le module d'interfaçage et la carte à puce d'au moins une clé (K_{chiffrement1}, K_{signature1}) et stockage d'au moins ladite clé négociée par le module d'interfaçage et par la carte à puce ;
et selon lequel, après un arrêt, puis une remise en oeuvre, de l'alimentation électrique de la carte à puce par le module d'interfaçage, le terminal étant maintenu sous tension, le procédé comprenant les étapes suivantes
(iv) chiffrement d'une commande de reprise d'exploitation par le module d'interfaçage de fonctions sécurisées offertes la carte à puce par le module d'interfaçage avec la clé négociée stockée par le module d'interfaçage et envoi de ladite commande chiffrée à la carte à puce ;
(v) réception par la carte à puce de ladite commande chiffrée et déchiffrement de ladite commande chiffrée par la clé négociée stockée dans la carte à puce
(vi) puis, exploitation par le module d'interfaçage de fonctions sécurisées offertes par la carte à puce, seulement si la commande de reprise déchiffrée par la carte à puce est reconnue en tant que commande de reprise par la carte à puce.

2. Procédé selon la revendication 1, selon lequel les étapes (i), (ii) et (iii) sont effectuées à chaque occurrence d'un arrêt, puis d'une remise en oeuvre, de l'alimentation électrique de la carte à puce (13) par le module d'interfaçage (12), le terminal (10) étant maintenu sous tension.

3. Procédé selon la revendication 1 ou 2, selon lequel au moins une nouvelle clé (K_{chiffrement2}, K_{signature2}) destinée au chiffrement de la commande de reprise est négociée entre le module d'interfaçage et la carte à puce après chaque occurrence d'un arrêt, puis d'une remise en oeuvre, de l'alimentation électrique de la carte à puce par le module d'interfaçage, le terminal étant maintenu sous tension.

4. Procédé selon l'une quelconque des revendications précédentes, selon lequel l'exploitation par le module d'interfaçage (12) de fonctions sécurisées offertes par la carte à puce (13) est réalisée pour la mise en oeuvre par le terminal d'une communication à destination d'un réseau de télécommunications mobiles.

5. Procédé selon l'une quelconque des revendications précédentes, selon lequel la clé (K_{chiffrement1}, K_{signature1}) destinée au chiffrement de la commande de reprise négociée entre le module d'interfaçage et la carte à puce est en outre utilisée pour chiffrer les échanges entre le module d'interfaçage et la carte à puce dans le cadre de l'exploitation par le module d'interfaçage de fonction(s) sécurisée(s) pour la mise en oeuvre par le terminal d'une communication à destination d'un réseau de télécommunications mobiles.

6. Procédé selon l'une quelconque des revendications précédentes, selon lequel le module d'interfaçage (12) et la carte à puce (13) négocient et stockent à la fois une clé de chiffrement (K_{chiffrement1}) et une clé de signature (K_{signature1}), et selon lequel la commande de reprise est signée à l'aide de la clé de signature et chiffrée à l'aide de la clé de chiffrement, l'exploitation par le module d'interfaçage de fonctions sécurisées offertes par la carte à puce étant reprise en outre seulement si la signature de la commande de reprise par le module d'interfaçage à l'aide de la clé de signature est reconnue par la carte à puce.

7. Programme d'ordinateur destiné à une carte à puce (13) comprenant des instructions permettant la mise en oeuvre des étapes, incombant à la carte à puce, d'un procédé selon l'une quelconque des revendications 1 à 6 lors de l'exécution dudit programme sur des moyens de traitement.

8. Carte à puce (13) comprenant des moyens adaptés pour mettre en oeuvre les étapes, qui incombent à la carte à puce, d'un procédé selon l'une quelconque des revendications 1 à 6.

9. Module d'un terminal comprenant des moyens adaptés pour mettre en oeuvre les étapes, qui incombent au module d'interfaçage (12), d'un procédé selon l'une quelconque des revendications 1 à 6.

10. Terminal (10) comprenant une carte à puce selon la revendication 8 et/ou un module selon la revendication 9.

## Patentansprüche

1. Verfahren zum Sichern in einem Endgerät (10), das eine Chipkarte (13), die gesicherte Funktionen bietet, eine Benutzeroberfläche (11), ein Modul (12) zur Bildung einer Schnittstelle mit der Chipkarte (13), das angepasst ist, um mindestens ein Stoppen oder ein Ingangsetzen der Stromversorgung der Chipkarte zu steuern, umfasst, wobei das Verfahren die folgenden Schritte umfasst:
- Empfangen eines Codes über die Benutzeroberfläche (11) des Endgeräts (10);
- Liefern über das Schnittstellenmodul (12) des Codes zu der Chipkarte (13);
- Prüfen durch die Chipkarte (13), dass der Code einem Zugangscode zu der Karte entspricht, der auf der Chipkarte gespeichert ist, und nur in dem positiven Fall, Nutzen durch das Schnittstellenmodul von gesicherten Funktionen, die die Chipkarte bietet;
- dann Aushandeln zwischen dem Schnittstellenmodul und der Chipkarte mindestens eines Codes (K_{chiffrement1}, K_{signature1}) und Speichern mindestens des durch das Schnittstellenmodul und die Chipkarte ausgehandelten Codes;
und wobei, nach einem Stoppen gefolgt von einem Wiederingangsetzen der Stromversorgung der Chipkarte durch das Schnittstellenmodul, das Endgerät unter Spannung gehalten wird, wobei das Verfahren die folgenden Schritte aufweist
(iv) Verschlüsseln eines Betriebswiederaufnahmebefehls durch das Schnittstellenmodul von gesicherten Funktionen, die die Chipkarte geboten werden, durch das Schnittstellenmodul mit dem ausgehandelten Code, der von dem Schnittstellenmodul gespeichert wird, und Senden des verschlüsselten Befehls zu der Chipkarte;
(v) Empfangen durch die Chipkarte des verschlüsselten Befehls und Entschlüsseln des verschlüsselten Befehls durch den ausgehandelten Code, der in der Chipkarte gespeichert ist;
(vi) dann Betrieb von gesicherten Funktionen, die die Chipkarte bietet, durch das Schnittstellenmodul nur, falls der von der Chipkarte entschlüsselte Wiederaufnahmebefehl als Wiederaufnahmebefehl durch die Chipkarte erkannt wird.

2. Verfahren nach Anspruch 1, wobei die Schritte (i), (ii) und (iii) bei jedem Auftreten eines Stoppens gefolgt von einem Wiederingangsetzen der Stromversorgung der Chipkarte (13) durch das Schnittstellenmodul (12) ausgeführt werden, wobei das Endgerät (10) unter Spannung gehalten wird.

3. Verfahren nach Anspruch 1 oder 2, wobei mindestens ein neuer Code (K_{chiffrement2}, K_{signature2}), der zum Verschlüsseln des Wiederaufnahmebefehls bestimmt ist, zwischen dem Schnittstellenmodul und der Chipkarte nach jedem Auftreten eines Stoppens gefolgt von einem Wiederingangsetzen der Stromversorgung der Chipkarte durch das Schnittstellenmodul ausgehandelt wird, wobei das Endgerät unter Spannung gehalten wird.

4. Verfahren nach einem der vorhergehenden Ansprüche, wobei das Nutzen von gesicherten Funktionen, die die Chipkarte (13) bietet, durch das Schnittstellenmodul (12) für das Ingangsetzen durch das Endgerät einer Kommunikation zu einem Mobilkommunikationsnetzwerk ausgeführt wird.

5. Verfahren nach einem der vorhergehenden Ansprüche, wobei der Code (K_{chiffrement1}, K_{signature1}), der zum Verschlüsseln des Wiederaufnahmebefehls, der zwischen dem Schnittstellenmodul und der Chipkarte ausgehandelt wird, bestimmt ist, außerdem zum Verschlüsseln der Austausche zwischen dem Schnittstellenmodul und der Chipkarte im Rahmen des Nutzens von einer/mehreren gesicherten Funktion/en durch das Schnittstellenmodul für das Ingangsetzen durch das Endgerät einer Kommunikation zu einem Mobilkommunikationsnetzwerk verwendet wird.

6. Verfahren nach einem der vorhergehenden Ansprüche, wobei das Schnittstellenmodul (12) und die Chipkarte (13) sowohl einen Verschlüsselungscode (K_{chiffrement1}) als auch einen Unterschriftcode (K_{signature1}) aushandeln und speichern, und gemäß dem der Wiederaufnahmebefehl mit Hilfe des Unterschriftcodes unterzeichnet und mit Hilfe des Verschlüsselungscodes verschlüsselt wird, wobei das Nutzen von gesicherten Funktionen, die die Chipkarte bietet, durch das Schnittstellenmodul außerdem nur wieder aufgenommen wird, falls die Unterzeichnung des Wiederaufnahmebefehls durch das Schnittstellenmodul mit Hilfe des Unterschriftcodes von der Chipkarte erkannt wird.

7. Computerprogramm, das für eine Chipkarte (13) bestimmt ist, Anweisungen umfassend, die das Umsetzen der Schritte, die der Chipkarte obliegen, eines Verfahrens nach einem der Ansprüche 1 bis 6 bei der Ausführung des Programms auf Verarbeitungsmitteln erlauben.

8. Chipkarte (13), die Mittel umfasst, die angepasst sind, um die Schritte, die der Chipkarte obliegen, eines Verfahrens nach einem der Ansprüche 1 bis 6 umzusetzen.

9. Modul eines Endgeräts, das Mittel, die angepasst sind, um die Schritte, die dem Schnittstellenmodul (12) obliegen, eines Verfahrens nach einem der Ansprüche 1 bis 6 umzusetzen, umfasst.

10. Endgerät (10), das eine Chipkarte nach Anspruch 8 und/oder ein Modul nach Anspruch 9 umfasst.

## Claims

1. Security method in a terminal (10) comprising a chip card (13) providing secure functions, a user interface (11), a module (12) for interfacing with the chip card (13) and designed to at least control a stoppage or an activation of the power supply of the chip card, the method comprising the following steps:
- reception of a code by the user interface (11) of the terminal (10);
- providing, via the interfacing module (12), of said code to the chip card (13);
- verification, by the chip card (13), that the code is identical to a code for accessing the card that is stored on the chip card, and, only in the affirmative case, exploitation, by the interfacing module, of secure functions provided by the chip card;
- then, negotiation between the interfacing module and the chip card of at least one key (K_{encryption1}, K_{signature1}) and storage of at least said negotiated key by the interfacing module and by the chip card;
and wherein, after a stoppage and then a reactivation of the power supply of the chip card by the interfacing module, with the terminal being kept powered, the method comprising the following steps:
(iv) encryption of a command to resume the exploitation, by the interfacing module, of secure functions provided the chip card by the interfacing module with the negotiated key stored by the interfacing module, and sending of said encrypted command to the chip card;
(v) reception, by the chip card, of said encrypted command, and decryption of said encrypted command by the negotiated key stored in the chip card;
(vi) then, exploitation, by the interfacing module, of secure functions provided by the chip card, only if the resumption command decrypted by the chip card is recognized as a resumption command by the chip card.

2. Method according to Claim 1, wherein the steps (i), (ii) and (iii) are performed upon each occurrence of a stoppage and then a reactivation of the power supply of the chip card (13) by the interfacing module (12), with the terminal (10) being kept powered.

3. Method according to Claim 1 or 2, wherein at least one new key (K_{encryption2}, K_{signature2}) intended for the encryption of the resumption command is negotiated between the interfacing module and the chip card after each occurrence of a stoppage and then a reactivation of the power supply of the chip card by the interfacing module, with the terminal being kept powered.

4. Method according to any one of the preceding claims, wherein the exploitation, by the interfacing module (12), of secure functions provided by the chip card (13) is carried out for the implementation, by the terminal, of a communication destined for a mobile telecommunications network.

5. Method according to any one of the preceding claims, wherein the key (K_{encryption1}, K_{signature1}) intended for the encryption of the resumption command negotiated between the interfacing module and the chip card is furthermore used to encrypt the exchanges between the interfacing module and the chip card in the context of the exploitation, by the interfacing module, of secure function(s) for the implementation, by the terminal, of a communication destined for a mobile telecommunications network.

6. Method according to any one of the preceding claims, wherein the interfacing module (12) and the chip card (13) negotiate and store both an encryption key (K_{encryption1}) and a signature key (K_{signature1}), and wherein the resumption command is signed with the aid of the signature key and encrypted with the aid of the encryption key, the exploitation, by the interfacing module, of secure functions provided by the chip card being resumed furthermore only if the signature of the resumption command by the interfacing module with the aid of the signature key is recognized by the chip card.

7. Computer program intended for a chip card (13) comprising instructions enabling the implementation of the steps, incumbent on the chip card, of a method according to any one of Claims 1 to 6 during the execution of said program on processing means.

8. Chip card (13) comprising means designed for implementing the steps, which are incumbent on the chip card, of a method according to any one of Claims 1 to 6.

9. Module of a terminal comprising means designed for implementing the steps, which are incumbent on the interfacing module (12), of a method according to any one of Claims 1 to 6.

10. Terminal (10) comprising a chip card according to Claim 8 and/or a module according to Claim 9.
